# EUROPEAN PATENT APPLICATION

(11) **EP 1 758 354 A2**
(43) Date of publication of application: **28.02.2007**
(21) Application number: 06014050.6
(22) Date of filing: 06.07.2006
(51) Int. Cl.: H04M 1/725

(54) **Method of operating a portable terminal in a calculator mode and portable terminal adapted to operate in the calculator mode**

(30) Priority: 24.08.2005 KR 20050077957
(71) Applicant: Samsung Electronics Co., Ltd., Suwon-si, Gyeonggi-Do (KR)
(72) Inventor: Kim, Joo-Sub, Yeongtong-gu Suwon-si Gyeonggi-do (KR)
(74) Representative: Lang, Johannes

(57) **Abstract**

An apparatus and method for operating a calculator mode in a portable terminal having a camera are provided. The apparatus and method comprise the steps of recognizing an arithmetic expression from an image taken by the camera and displaying the recognized arithmetic expression; shifting to an editing mode when an editing mode key is input, implementing editing operations, and editing the displayed arithmetic expression according to the editing operations; and implementing arithmetic calculation according to the edited arithmetic expression when a calculation implementation key is input and outputting a calculation result.

## Description

### BACKGROUND OF THE INVENTION

### 1. Field of the Invention

The present invention relates to an apparatus and method for operating a calculator mode in a portable terminal. More particularly, the present invention relates to an apparatus and method for operating a calculator mode in a portable terminal in which an arithmetic expression is recognized using a camera function of a portable terminal and arithmetic calculation is implemented according to the recognized arithmetic expression without the need for directly inputting the arithmetic expression.

### 2. Description of the Related Art

Portable terminals such as a cellular phone, a PDA (personal digital assistant), a PCS (personal communication service) phone, an IMT-2000 (international mobile telecommunication-2000) terminal, and a GSM (global system for mobile communication) terminal represent instruments enabling communication and data exchange while the user is mobile.

These portable terminals have been widely used throughout the world and are considered necessities. In many instances, these necessities are carried around at all times. Due to this fact, the increasing trend is to make mobile communication terminals smaller, slimmer, and lighter. This simplifies portability. Also, mobile communication terminals have more multimedia functions, increasing the ease with which various functions can be executed. In the future, the portable terminals will be further miniaturized, perform more functions, be used for multiple purposes, and be adapted for various multimedia or Internet environments.

While the basic function of portable terminals is to implement telecommunication functions, additional functional services are also provided. These additional functional services include services such as a memory function for storage and search of telephone numbers, an automatic signal receiving and transmitting function, a current time and date display function, an automatic power shut-off function, an emergency dialing function, a lock function, an alarm function, an area code confirmation function, a melody input function, and a calculator function for implementing arithmetic calculation, among others.

Generally, in a portable terminal which provides the calculator function for implementing arithmetic calculation, as the calculator function is selected from a menu through key manipulation by a user, the portable terminal operates under a calculator mode in which an arithmetic expression composed of figures and arithmetic symbols is input through manipulation of key buttons and then arithmetic calculation is implemented. Thus, in the case where the user frequently uses the calculator function of the portable terminal with a long and complex arithmetic expression, it is inconvenient to use the calculator function through the direct manipulation of key buttons.

Accordingly, there is a need for an improved method of operating a portable terminal under a calculator mode so that arithmetic calculation can be implemented without the need to directly input the arithmetic expression.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention has been made to solve the above-mentioned problems occurring in the prior art, and an object of exemplary embodiments of the present invention is to provide a method for operating a calculator mode in a portable terminal, in which an arithmetic expression is recognized using a camera and arithmetic calculation is implemented according to the recognized arithmetic expression eliminating the need to directly input individual components of the arithmetic expression.

In order to achieve this object, according to one aspect of an exemplary embodiment of the present invention, a method is provided for operating a calculator mode in a portable terminal having a camera. The method comprises the steps of recognizing an arithmetic expression from an image taken by the camera and displaying the recognized arithmetic expression; shifting to an editing mode when an editing mode key is input, implementing editing operations, and editing the displayed arithmetic expression according to the editing operations; and implementing arithmetic calculation according to the edited arithmetic expression when a calculation implementation key is input and outputting a calculation result.

Another object of an exemplary embodiment of the present invention is to provide a method for operating a calculator mode in a portable terminal, in which arithmetic calculation can be implemented according to an arithmetic expression selected from arithmetic expressions recognized by a camera.

In order to achieve this object, according to another aspect of an exemplary embodiment of the present invention, a method is provided for operating a calculator mode in a portable terminal having a camera. The method comprises the steps of recognizing at least one arithmetic expression from an image taken by the camera and displaying the recognized arithmetic expression; selecting through selection operations one arithmetic expression from at least one displayed arithmetic expression and displaying the selected arithmetic expression and implementing arithmetic calculation according to the displayed arithmetic expression when a calculation implementation key is input and outputting a calculation result.

Other objects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other objects, features and advantages of certain exemplary embodiments of the present invention will be more apparent from the following detailed description taken in conjunction with the accompanying drawings, in which:
FIG. 1 is a block diagram illustrating an entire construction of a portable terminal according to an exemplary embodiment of the present invention;
FIG. 2 is a flow chart illustrating operations of the portable terminal under a calculator mode according to a first exemplary embodiment of the present invention;
FIG. 3 is a flow chart illustrating operations of the portable terminal under a calculator mode according to a second exemplary embodiment of the present invention;
FIG. 4 is a flow chart illustrating operations for recognizing at least one arithmetic expression through a camera according to the first and second exemplary embodiments of the present invention;
FIG. 5 is a flow chart illustrating operations for editing an arithmetic expression according to the first and second exemplary embodiments of the present invention;
FIGs. 6A through 6C are views illustrating an arithmetic expression applied to the first exemplary embodiment of the present invention; and
FIGs. 7A through 7C are views illustrating an arithmetic expression applied to the second exemplary embodiment of the present invention.

Throughout the drawings, the same drawing reference numerals will be understood to refer to the same elements, features, and structures.

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

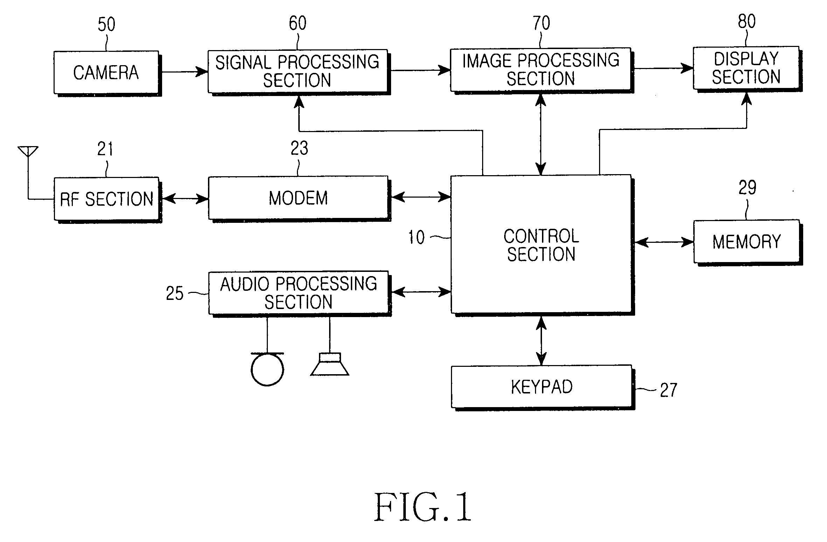

FIG. 1 is a block diagram of a portable terminal according to an exemplary embodiment of the present invention. In the exemplary embodiment of the present invention, the portable terminal may comprise a mobile telephone.

Referring to FIG. 1, an RF section 21 implements telecommunication functions of the portable terminal. The RF section 21 comprises an RF transmitter (not shown) for up converting and amplification of a signal to be transmitted and an RF receiver (not shown) for low noise amplification and down converting of a signal to be received.

A modem 23 includes a transmitter for coding and modulating the signal to be transmitted and a receiver for decoding and demodulating the signal to be received.

An audio processing section 25 constitutes a codec. The codec comprises a data codec for processing packet data and the like and an audio codec for processing an audio signal such as voice and the like. The audio processing section 25 functions to convert a digital audio signal received from the modem 23 into an analog signal by the audio codec and to reproduce the converted analog signal. The audio processing signal 25 also functions to convert an analog audio signal generated and transmitted from a microphone into a digital audio signal by the audio codec and to transmit the converted digital audio signal to the modem 23. The codec may be provided separately or included in a control section 10.

A keypad 27 has keys for inputting numerical and word information and function keys for establishing various functions.

A memory 29 comprises a program memory and a data memory. Programs are stored in the program memory for controlling general operations of the portable terminal, for perceiving an arithmetic expression from an image taken by a camera and for implementing arithmetic calculation according to an exemplary embodiment of the present invention. The data memory functions to temporarily store data produced while running the programs. In the data memory, numerical data and arithmetic symbol data are stored according to an exemplary embodiment of the present invention.

The control section 10 functions to control all operations of the portable terminal and can include the modem 23 and the codec. The control section 10 controls the camera according to an exemplary embodiment of the present invention so as to perceive an arithmetic expression from a photographed image, display the perceived arithmetic expression, shift to an editing mode when an editing mode key is input, and implement editing operations. If a calculation implementation key is input, arithmetic calculation is implemented by a calculator included in the control section 10 according to the perceived arithmetic expression, and the calculation result is output. Further, if a plurality of perceived arithmetic expressions are input, these arithmetic expressions are displayed along with their respective check boxes so that one of the perceived arithmetic expressions can be selected.

The camera 50 photographs image data, and has a camera sensor for converting a photographed optical signal into an electrical signal. Here, the camera sensor is assumed to be a CCD (charge-coupled device) sensor, but any suitable sensor device could be used.

A signal processing section 60 converts the signal output from the camera 50 into an image signal. Here, the signal processing section 60 may be embodied as a DSP (digital signal processor).

An image processing section 70 functions to generate display data for displaying the image signal output from the signal processing section 60. Under the control of the control section 10, the image processing section 70 transmits the received image signal according to the standard of a display section 80 and serves to compress and decompress the image data. The image processing section 70 transmits a starting address of the image data output to the display section 80 or changes and transmits the starting address under the control of the control section 10.

The display section 80 displays the image data output from the image processing section 70. Here, the display section 80 may comprise a liquid crystal display (LCD). In this case, the display section 80 comprises an LCD controller, a memory for storing image data and an LCD element. In the case that the LCD is embodied as a touch screen, the keypad 27 and the LCD serve as an input section. The display section 80 includes an image data display part through which image data is output.

Describing operations of the portable terminal constructed as mentioned above with reference to FIG. 1, if a user implements a dialing operation through the keypad 27 and selects a transmitting mode, the control section 10 senses this situation. The dialing information received through the modem 23 is processed and converted into an RF signal through the RF section 21. The converted RF signal is then output and if a counterpart subscriber generates a responsive signal, this signal is sensed by the RF section 21 and the modem 23. As a voice communication path is created through the audio processing section 25, the user can implement communication. In a receiving mode, the control section 10 senses the situation under the receiving mode through the modem 23 and generates a ring signal through the audio processing section 25. As the user replies, the control section 10 senses the reply of the user. As a voice communication path is created through the audio processing section 25, the user can implement communication. While voice communication is exemplified in the transmitting and receiving modes, it is to be readily understood that data communication for transmitting and receiving packet data and image data can also be implemented. In a standby state or in the case of text communication, the control section 10 displays text data processed through the modem 23 on the display section 80.

Hereafter, operations of perceiving an arithmetic expression using a camera and calculating the perceived arithmetic expression according to an exemplary embodiment of the present invention in the portable terminal constructed as mentioned above will be described. In a standby state, if the user inputs a camera perceiving calculation mode key through the keypad 27, the control section 10 controls the camera 50, the image processing section 70, the memory 29 and the display section 80 to implement a camera function. Also, the control section 10 perceives an arithmetic expression from an image obtained through the camera function and displays the perceived arithmetic expression. Then, as the user inputs an editing mode key through the keypad 27, the control section 10 controls the memory 29 and the display section 80 to shift to an editing mode, and the displayed arithmetic expression is edited through the editing operations by the user. Next, if the user inputs a calculation implementation key through the keypad 27, the control section 10 controls the memory 29 and the display section 80 to implement arithmetic calculation according to the edited arithmetic expression and displays the calculation result.

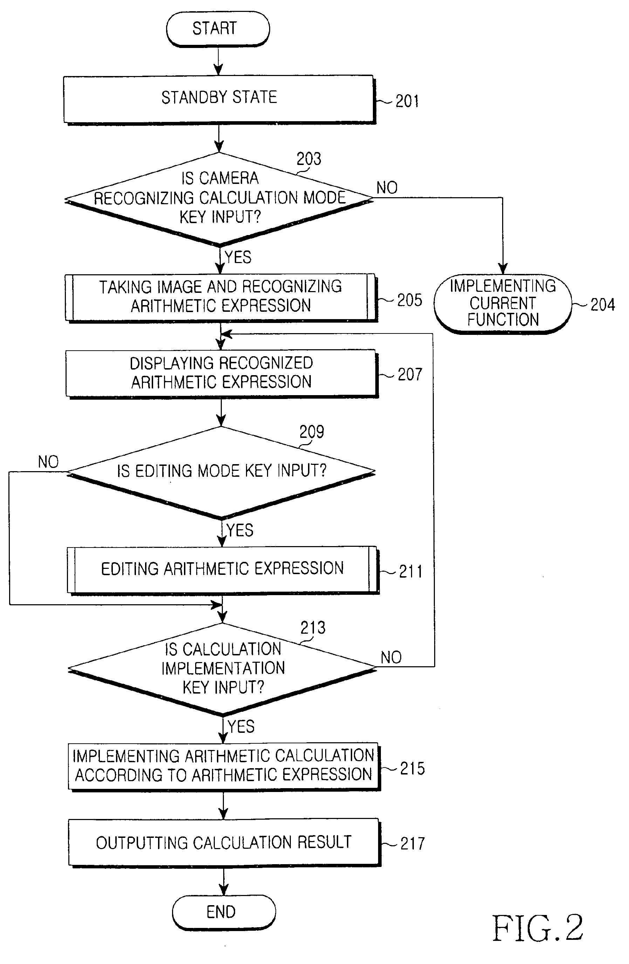

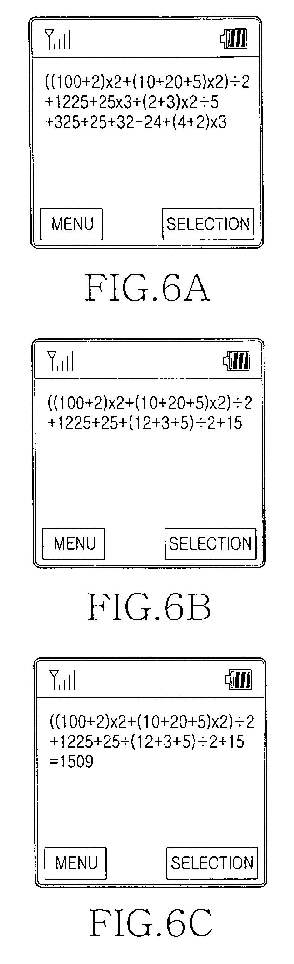

FIG. 2 is a flow chart illustrating operations of the portable terminal under a calculator mode according to a first exemplary embodiment of the present invention, and FIGs. 6A through 6C are views illustrating an exemplary arithmetic expression applied to the first exemplary embodiment of the present invention.

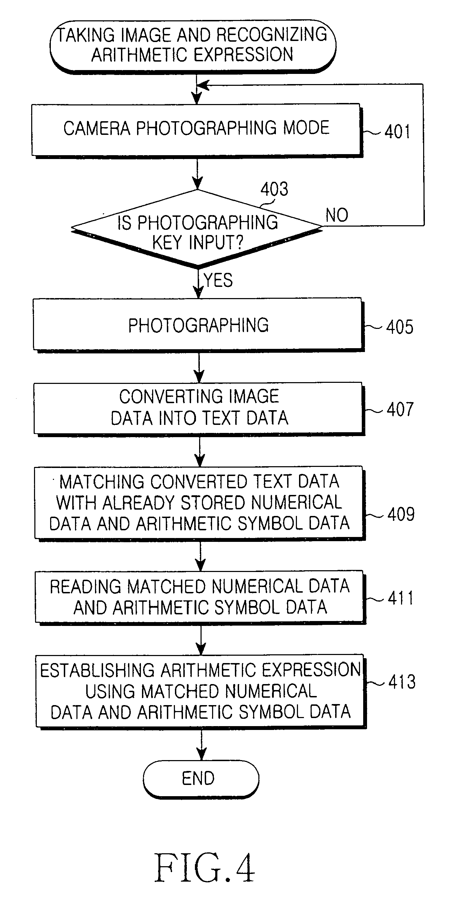

The operations of perceiving an arithmetic expression through the camera function of the portable terminal and implementing arithmetic calculation according to the perceived arithmetic expression will be described with reference to FIGs. 2 and 6A through 6C. In step 201 which is a standby state, if the user inputs the camera perceiving calculation mode key through the keypad 27, the control section 10 senses this situation at step 203, and proceeds to step 205. Otherwise, the device continues implementing the current function at step 204. At step 205, the control section 10 implements the camera function such that an image such as a document including an arithmetic expression is photographed and the arithmetic expression is perceived from the photographed image. The operation of perceiving the arithmetic expression using the camera function at step 205 will be further described later in detail with reference to FIG. 4.

The control section 10 controls the display section 80 and displays the arithmetic expression perceived at step 205 as shown in FIG. 6A. At step 207, the arithmetic expression is displayed in the form of text data which can be edited.

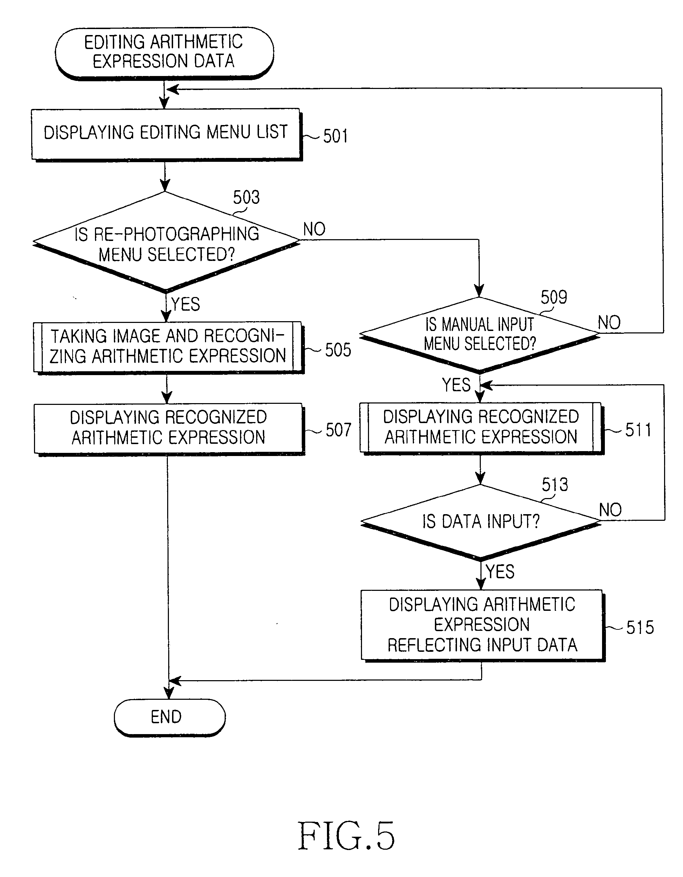

If the user inputs the editing mode key through the keypad 27, the control section 10 senses this situation at step 209 and shifts to the editing mode at step 211. Editing operations are enabled at step 211 so that the arithmetic expression is edited according to the editing operations. Next, the edited arithmetic expression as shown in FIG. 6B is displayed. The operation of implementing the editing operations and editing the arithmetic expression at step 211 will be further described later in detail with reference to FIG. 5.

Next, if the user inputs the calculation implementation key through the keypad 27, the control section 10 senses this situation at step 213 and proceeds to step 215. In step 215, the control section 10 controls the memory 29 to implement the arithmetic calculation of the arithmetic expression. Further, the control section 10 controls at step 217 the display section 80 to output and display the calculation result as shown in FIG. 6C. At this time, the displayed calculation result can be continuously used when implementing arithmetic calculation of a next arithmetic expression, and if a new arithmetic expression is input, the new arithmetic expression is displayed while removing the preceding arithmetic expression. The control section 10 controls the audio processing section 25 at step 217 to output, as audio data, the calculation result obtained by implementing the arithmetic calculation of the arithmetic expression.

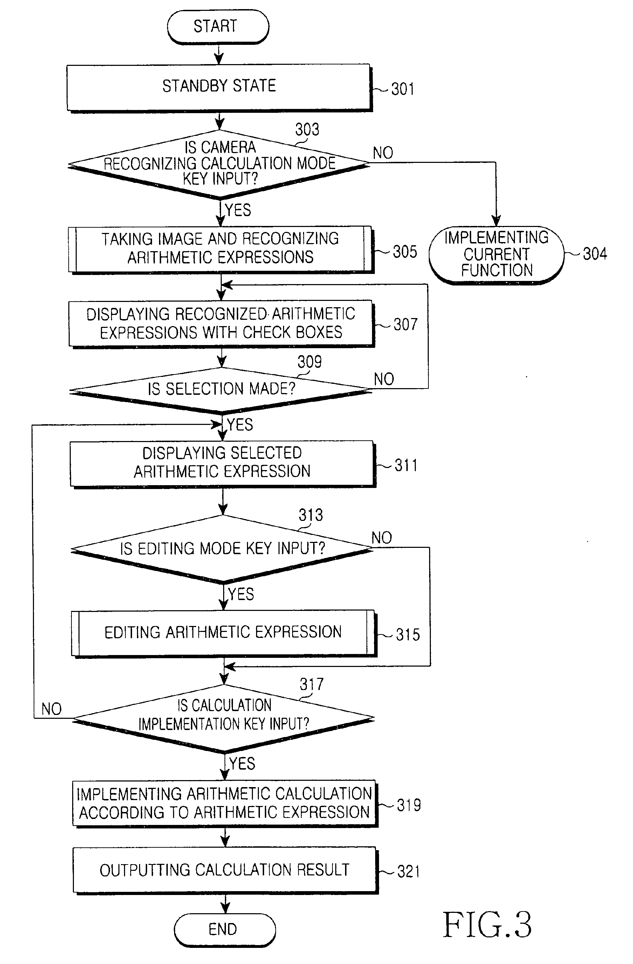

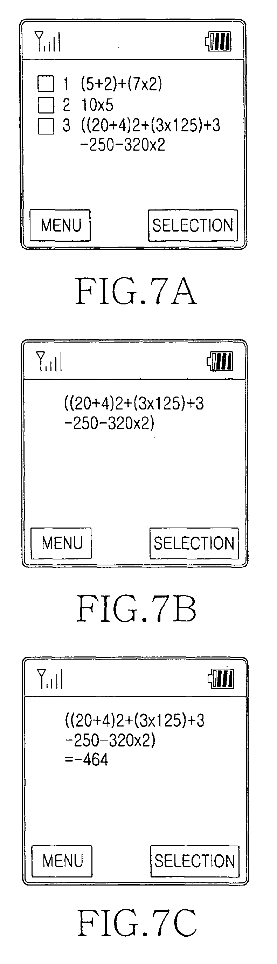

FIG. 3 is a flow chart illustrating operations of the portable terminal under a calculator mode according to a second exemplary embodiment of the present invention, and FIGs. 7A through 7C are views illustrating an exemplary arithmetic expression applied to the second exemplary embodiment of the present invention.

The operations of perceiving arithmetic expressions through the camera function of the portable terminal, selecting one of the arithmetic expressions and implementing arithmetic calculation according to the selected arithmetic expression will be described with reference to FIGs. 3 and 7A through 7C. In step 301 which is a standby state, if the user inputs the camera perceiving calculation mode key through the keypad 27, the control section 10 senses this situation at step 303, and proceeds to step 305. Otherwise, the device continues implementing the current function at step 304. At step 305, the control section 10 implements the camera function such that an image, for example, a document including arithmetic expressions is photographed and the arithmetic expressions are perceived from the photographed image. The operation of perceiving the arithmetic expressions using the camera function at step 305 will be further described later in detail with reference to FIG. 4.

The control section 10 further controls the memory 29 and the display section 80 to display the arithmetic expressions perceived at step 305 as shown in FIG. 7A along with their respective check boxes. Here, the arithmetic expressions are displayed in the form of text data which can be edited, and the check boxes are displayed only when a plurality of arithmetic expressions are perceived. When the plurality of arithmetic expressions are perceived, a list of arithmetic expressions may be generated and displayed, or the respective perceived arithmetic expressions may be provided with indexes so that index numbers can be displayed.

If the user selects one of the displayed arithmetic expressions using the keypad 27, the control section senses this situation at step 309 and controls the display section 80 at step 311 to display only the selected arithmetic expression as shown in FIG. 7B.

After that, if the user inputs the editing mode key through the keypad 27, the control section 10 senses this situation at step 313, shifts to the editing mode at step 315, enables editing operations, edits the displayed arithmetic expression according to the editing operations, and displays the edited arithmetic expression. The operation of enabling the editing operations and editing the arithmetic expression at step 315 will be further described later in detail with reference to FIG. 5.

Next, if the user inputs the calculation implementation key through the keypad 27, the control section 10 senses this situation at step 317 and proceeds to step 319. In step 319, the control section 10 controls the memory 29 to implement the arithmetic calculation of the arithmetic expression. Further, the control section 10 controls the display section 80 at step 321 to output and display the calculation result as shown in FIG. 7C. At this time, the displayed calculation result can be continuously used when implementing arithmetic calculation of a next arithmetic expression, and if a new arithmetic expression is input, the new arithmetic expression is displayed while removing the preceding arithmetic expression. The control section 10 controls the audio processing section 25 at step 321 to output, as audio data, the calculation result obtained by implementing the arithmetic calculation of the arithmetic expression.

FIG. 4 is a flow chart illustrating operations for perceiving at least one arithmetic expression through a camera according to the first and second exemplary embodiments of the present invention. Describing the operation of perceiving an arithmetic expression through the camera with reference to FIG. 4, if the camera perceiving calculation mode key is input, the control section 10 controls the camera 50, the signal processing section 60, the image processing section 70 and the display section 80 to shift to a camera photographing mode at step 401. The camera photographing mode proceeds to a preview mode to transmit an image signal captured by the camera 50 through the signal processing section 60 to the image processing section 70. Further, the control section 10 controls the image processing section 70 and the display section 80 to display the image data on the display section 80.

Thereafter, if the user inputs a photographing key through the keypad 27 at step 403, the control section 10 proceeds to step 405 to photograph an image. Here, the image may be an image of a document including an arithmetic expression according to an exemplary embodiment of the present invention. If photographing is completed, the control section 10 controls the memory 29 at step 407 to drive a text recognizing program and convert the image data of the photographed image into text data. And, the control section 10 analyzes the converted text data and controls the memory 29 to match the text data with the numerical data and arithmetic symbol data already stored in the memory 29 at step 409. Then, the control section 10 reads out the matched numerical data and arithmetic symbol data at step 411. Next, the control section 10 establishes an arithmetic expression using the read-out numerical data and arithmetic symbol data at step 413. For example, if the text data includes word data, numerical data and arithmetic symbol data, matching the text data with the numerical data and arithmetic symbol data already stored in the memory 29 makes it possible to only read out the numerical data and arithmetic symbol data while excluding the word data. In this case, only the arithmetic expression can be extracted from the text data.

For example, if a sentence, "What is the arithmetic calculation result of ((100+2)*+(10+20+30)*2)?" is photographed format the request of the user, the photographed sentence is output as image data, and by driving the text recognizing program, the image data is converted into text data. The converted text data is matched with the numerical data and arithmetic symbol data already stored, and only the numerical data and arithmetic symbol data such as "((100+2)*+(10+20+30)*2)" is read out from the text data and then output.

FIG. 5 is a flow chart illustrating operations for editing an arithmetic expression according to the first and second exemplary embodiments of the present invention. The operations of editing the arithmetic expression will be described below with reference to FIG. 5. If the editing mode key is input, the control section 10 controls the memory 29 and the display section 80 at step 501 to display the editing menu list as shown below in Table 1.

**[Table 1]**

| | Editing menu list |
|---|---|
| 1 | Re-photographing menu |
| 2 | Manual input menu |

If the user selects, using the keypad 27, the first numbered menu, that is, "re-photographing menu" from the Editing menu list, the control section 10 senses this situation at step 503 and proceeds to step 505 to implement the camera function so that the document including the arithmetic expression is re-photographed and the arithmetic expression is re-recognized from the re-photographed image. Then, the control section 10 controls the display section 80 at step 507, and displays the arithmetic expression recognized in step 505 as shown in FIG. 6A. If a plurality of arithmetic expressions are recognized, the control section 10 controls the memory 29 and the display section 80 and displays the recognized arithmetic expressions having their respective check boxes as shown in FIG. 7A.

If the user selects, using the keypad 27, the second numbered menu, that is, "manual input menu" from the editing menu list, the control section 10 senses this situation at step 509 and proceeds to step 511. In step 511, the control section 10 proceeds to manual input editing mode and controls the memory 29 and the display section 80 to display the arithmetic expression recognized before the editing mode key is input. Here, the arithmetic expression is displayed in the form of text data which can be edited.

Then, if the user implements editing operations using the keypad 27 and inputs numerical data and/or arithmetic symbol data, the control section 10 senses this situation at step 513 and controls the display section 80 at step 515 to display the arithmetic expression to which the input numerical data and/or arithmetic symbol data is reflected.

An apparatus and method for recognizing an arithmetic expression using a camera equipped to a portable terminal and for implementing arithmetic calculation are provided in the exemplary embodiments of the present invention. The advantage of using the exemplary embodiments of the present invention is that it is possible to implement arithmetic calculation according to the recognized arithmetic expression through manipulation of keys without the need to directly input the arithmetic expression. Also, because a method for selecting an arithmetic expression is provided, arithmetic calculation can be implemented according to an arithmetic expression selected from arithmetic expressions recognized through a camera function. A method for editing an arithmetic expression is provided which results in improved user convenience. For example, when the camera erroneously recognizes an arithmetic expression, the arithmetic expression can be re-recognized or simply corrected.

While the present invention has been shown and described with reference to certain exemplary embodiments thereof, it will be understood by those skilled in the art that various changes in form and details may be made therein without departing from the spirit and scope of the present invention as defined by the appended claims.

## Claims

1. A method for operating a portable terminal in a calculator mode, the method comprising:
recognizing an arithmetic expression from an image taken by a camera of the portable terminal and displaying the recognized arithmetic expression;
shifting to an editing mode when an editing mode key is input, implementing editing operations and editing the displayed arithmetic expression according to the editing operations; and
implementing arithmetic calculation according to the edited arithmetic expression when a calculation implementation key is input and outputting a calculation result.

2. The method as set forth in claim 1, wherein the recognizing step further comprises:
converting image data of the image into text data;
analyzing the converted text data and matching the converted text data with numerical data and arithmetic symbol data which is already stored; and
reading out matched numerical data and arithmetic symbol data and forming an arithmetic expression.

3. The method as set forth in claim 1, wherein the step of shifting to an editing mode and implementing editing operations further comprises:
displaying an editing menu list; and
implementing a camera function and re-recognizing an arithmetic expression when a re-photographing mode is selected from the displayed editing menu list.

4. The method as set forth in claim 3, wherein the step of shifting to an editing mode and implementing editing operations further comprises:
displaying the arithmetic expression recognized before the editing mode key is input, when a manual input menu is selected from the displayed editing menu list; and
displaying an arithmetic expression on which data manually input is reflected.

5. The method as set forth in claim 1, wherein the arithmetic expression is displayed in the form of text data.

6. The method as set forth in claim 1, wherein the calculation result is output in the form of audio data.

7. A method for operating a calculator mode in a portable terminal comprising a camera, the method comprising:
recognizing at least one arithmetic expression from an image taken by the camera and displaying the recognized arithmetic expression;
selecting one arithmetic expression from at least one displayed arithmetic expression and displaying the selected arithmetic expression; and
implementing arithmetic calculation according to the displayed arithmetic expression when a calculation implementation key is input and outputting a calculation result.

8. The method as set forth in claim 7, wherein the at least one displayed arithmetic expression is displayed along with a check box.

9. The method as set forth in claim 7, wherein the step of recognizing at least one arithmetic expression from an image taken by the camera further comprises:
converting image data of the image into text data;
analyzing the converted text data and matching the converted text data with numerical data and arithmetic symbol data which is already stored;
and
reading out matched numerical data and arithmetic symbol data and forming an arithmetic expression.

10. The method as set forth in claim 7, further comprising the step of:
shifting to an editing mode when an editing mode key is input, implementing editing operations, and editing the displayed arithmetic expression according to the editing operations.

11. The method as set forth in claim 10, wherein the step of shifting to an editing mode and implementing editing operations further comprises:
displaying an editing menu list; and
implementing a camera function and re-recognizing an arithmetic expression when a re-photographing mode is selected from the displayed editing menu list.

12. The method as set forth in claim 11, wherein the step of shifting to an editing mode and implementing editing operations further comprises:
displaying the arithmetic expression recognized before the editing mode key is input, when a manual input menu is selected from the displayed editing menu list; and
displaying an arithmetic expression on which data manually input is reflected.

13. The method as set forth in claim 7, wherein the calculation result is output in the form of audio data.

14. A portable terminal device comprising:
a controller for recognizing an arithmetic expression from an image taken by a camera;
a display section for displaying the recognized arithmetic expression;
a keypad for shifting to an editing mode when an editing mode key is input, implementing editing operations and for editing the displayed arithmetic expression according to the editing operations, and
an audio processing section for outputting a calculation result,
wherein the controller comprises a calculator for implementing arithmetic calculation according to the edited arithmetic expression when a calculation implementation key is input.

15. The portable terminal device of claim 14, further comprising:
a signal processing section for converting image data of an image taken into text data;
a control section for analyzing the converted text data and matching the converted text data with numerical data and arithmetic symbol data which is already stored and for reading out matched numerical data and arithmetic symbol data and forming an arithmetic expression.

16. The portable terminal device of claim 14, further comprising:
a control section for shifting to an editing mode when an editing mode key is input and for implementing editing operations.

17. The portable terminal device of claim 14, further comprising:
a display section for displaying an editing menu list; and
a control section for implementing a camera function and re-recognizing an arithmetic expression when a re-photographing mode is selected from the editing menu list.
